# EUROPEAN PATENT SPECIFICATION

(11) **EP 1 912 772 B1**
(45) Date of publication and mention of the grant of the patent: **25.01.2012**
(21) Application number: 06755562.3
(22) Date of filing: 19.06.2006
(51) Int. Cl.: B29C 45/43, F16L 15/00, F16L 9/12, F16L 47/16, F16L 55/165, B29C 45/26

(54) **METHOD AND APPARATUS FOR THE PRODUCTION OF HOLLOW MOULDED ARTICLES**
VERFAHREN UND VORRICHTUNG ZUR HERSTELLUNG VON GEFORMTEN HOHLKÖRPERN
PROCEDE ET APPAREIL DE PRODUCTION D'ARTICLES MOULES CREUX

(30) Priority: 21.06.2005 GB 0512630
(43) Date of publication of application: 23.04.2008
(73) Proprietor: Scott, Kenneth Latimer, Cornwall TR19 7PW (GB)
(72) Inventor: Scott, Kenneth Latimer, Cornwall TR19 7PW (GB)
(74) Representative: Leppard, Andrew John
(86) International application number: PCT/GB2006/002230
(87) International publication number: WO 2006/136796

(56) References cited:
- EP-A- 1 004 811
- DE-A1- 10 333 160
- US-A- 4 632 657
- US-A- 5 490 966
- PATENT ABSTRACTS OF JAPAN vol. 2003, no. 12, 5 December 2003 (2003-12-05) -& JP 2003 265934 A (ASAHI MEDICAL CO LTD), 24 September 2003 (2003-09-24)

## Description

The present invention relates generally to the production of hollow moulded articles by injection moulding of plastics material, and particularly, but not exclusively, to the production of elongate pipes.

The production of pipes by injection moulding has a number of advantages, among which are the fact that the wall thickness can be made constant, and the material used need not be one suitable for the more conventional extrusion process by which very long lengths of pipe are currently made.

This has particular relevance in specific areas of activity, especially in connection with the production of pipe sections intended to be used for drainage purposes, especially when used to replace previously-installed drains.

Modem plastics pipe for drainage purposes is, in the main, produced by extrusion, which has a number of advantages including the ability to produce relatively long lengths of pipe, which are then coiled for transport and laid into trenches upon installation. Extruded pipe has certain disadvantages, however, in particular the wall thickness is not absolutely constant because of the variation in process parameters during extrusion and the arrangements made for connection of adjacent pipe sections requires external sleeves which are necessarily larger in diameter than the diameter of the pipe. For many uses this can be tolerated, especially on primary installation of pipes which are laid in open trenches. However, when it comes to the reinstatement of degraded pipes resulting either from traffic overload or from the depredations of time, the physical strength of extruded pipe is insufficient to allow certain of the techniques which might be used for this purpose to be employed.

One of these techniques involves the introduction of a new replacement pipe into the interior of a fractured or otherwise degenerated clay or fibre pipe. The expense and difficulty of excavating existing pipelines for the purpose of replacement make this course acceptable only if there are no alternatives. Indeed, one way which has been adopted in order to economise and to make this procedure more viable economically, is to create a series of spaced excavations along the line of a pipe, and to insert a new pipe into the interior of the old one by drawing it forward between two spaced excavations. Although this involves a small reduction in the interior diameter of the pipe, the capacity of existing pipelines is not seriously reduced by this process. However, the strength of the wall of the new pipe being introduced determines how much force can be applied to overcome the frictional resistance of its introduction, and if long lengths of pipe were to be used such force would be enormous and impractical. For this reason the excavations still have to be relatively closely spaced.

In circumstances where the cohesion of the pipeline has been damaged and its integrity corrupted the necessity for a mole or 'prig' to be introduced first to ream out the bore complicates the issue and increases the cost.

The present invention is based on the realisation that by utilising relatively short injection moulded pipe sections which can be fitted together it is possible to apply greater forces to push the new pipe along the interior of the older one since each new pipe section can have force applied to its rearward end rather than its leading end at an intermediate point, which would be necessary to be able to apply the technique to a long length of extruded pipe. Further, the use of injection moulded pipes makes it possible to adopt a new form of coupling which does not involve the use of external sleeves and which, therefore, leaves both the external surface and the internal surface of the pipeline substantially continuous and uninterrupted even at junctions between adjacent pipe sections.

Hithertofore, however, the injection moulding of elongate articles such as pipe sections has been fraught with difficulty because of the necessity to utilise an internal mandrel within the mould cavity to define the internal curved surface. Collapsible mandrels which require to be assembled and dismantled prior to and after use have been tried, but this is expensive, makes the moulding cycle longer and, furthermore, frequently results in the production of elongate flashing lines within the interior of the pipe. One of the important considerations for drain pipelines is that the interior surface of the pipe should be as unobstructed as possible and should present a smooth hard surface resistant to corrosive attack and organic growths.

DE 103 33 160 A1 discloses a method for production of a soft and flexible plastic tube which is sealed at one end in which air is injected between the tube and the inner mandrel to facilitate its removal.

JP6270212 discloses techniques for the injection moulding of a tube-like object in which air is injected between the tube and the inner mandrel to facilitate its removal. JP 6270212 discloses the preamble of claim 10.

The present invention seeks, therefore, to provide a method for producing elongate injection moulded plastics articles in which a single solid mandrel may be used to define the interior surface, and the invention is focused on the procedures and arrangements made for withdrawal of the mandrel from the injection moulded article to leave a smooth continuous uninterrupted internal surface.

According to one aspect of the present invention, therefore, a method of producing an injection-moulded plastics article as claimed in Claim 1.

The pressurised fluid performs two functions, namely not only that of lubricant between the outer surface of the mandrel and the inner surface of the moulded article, but also as a separating agent or release agent serving to space the material of the moulded article from the mandrel, thereby compressing the moulded article against the outer die parts to maintain the density of the injection moulded article, provide it with a cooling effect, and promote release of the mandrel at the same time.

In a preferred arrangement the pressurised fluid is delivered through passages in the mandrel to openings in the surface thereof. Such openings are preferably of a shape and size such that at least one dimension is small enough to prevent the plastics material to be injection moulded from entering the openings upon introduction into the mould cavity, for which purpose, of course, a preliminary pressure can be applied to the passages within the mandrel during introduction of the material which is to form the moulded article. It is important in this respect that escape routes are provided for any fluid entering the mould cavity other than the plastics material to be moulded so that no unwanted formations are caused as a result of the presence of the pressurising fluid in the mould cavity during moulding.

It is preferred that one end of the mould cavity is closed with the terminal die part bearing an external screw thread to form a corresponding internal screw thread in the end of the moulded article. Removal of such insert after moulding can be achieved by unscrewing it from the thread thus formed.

The terminal die part and the corresponding end of the mandrel are shaped to form an annular space in which an inwardly directed annular flashing is formed on the inner surface of the moulded article upon introduction of the plastics material into the moulded cavity.

Such terminal die part may be removed either before or after withdrawal of the mandrel, and the other outer die parts are then preferably separated only after withdrawal of the mandrel.

The threaded terminal die part is preferably removed by unscrewing it before the outer die parts are separated.

The method of the invention may be performed utilising a liquid as the pressurised fluid, but it is preferred that the pressurised fluid be a gas and the most convenient pressurised gas is air since this is readily available in unlimited quantities. It is preferred that the pressurised fluid, whether it is liquid, gas or air, is preliminarily cooled before introduction into the mould cavity.

In order to maximise its effectiveness the pressurised fluid is preferably delivered to the interface between the mandrel and the internal surface of the moulded article at a plurality of points substantially uniformly distributed over the area of the interface.

In another aspect the present invention provides apparatus for producing a hollow moulded article as claimed in Claim 10.

At least one dimension of each of the said openings in the said part of the surface of the mandrel is preferably such as to inhibit the entry of the plastics material upon injection thereof into the mould cavity. This can be achieved by a plurality of small circular openings, or by elongate slot-like openings which have the advantage of each providing a greater cross-sectioned area for the flow of fluid whilst nevertheless inhibiting ingress of plastics material during moulding due, for example, to the surface tension of the injected plastics material.

In the production of elongate pipe sections the mandrel may be a cylindrically curved solid monolithic element with a flat end wall against which abuts a terminal part of the outer die assembly. At the other end the terminal die part may bear a screw thread for forming a corresponding internal threaded portion in an open end of the moulded article. In order to enable the pipe sections to be screwed together, of course, the outer die parts may likewise be shaped to provide an external screw thread on the moulded article at the end opposite that provided with the internal screw thread. Adjacent sections of pipe can then simply be screwed together to assemble them into a pipeline. A suitable annular groove for receiving an O-ring may be provided in the internal or external surface, and corresponding grooves may be provided which are located in register with one another when two adjacent pipe sections are screwed fully into position.

The apparatus of the invention may include coolant means for the outer die parts and/or for the mandrel by the provision of coolant passages through which, in use, a coolant fluid can flow in use. This may be used for cooling the die parts during and after injection mouldings of the moulded product and also for cooling the moulded product itself after injection and before (and/or during) withdrawal of the mandrel.

In order to encourage differential friction between the inner surfaces of the outer die parts and the outer surface of the mandrel the inner surface of the outer die parts themselves may be roughened. This is acceptable since the separating movement of the outer die parts is radially away from the moulded article, whereas the separation of the mandrel involves relative sliding motion between the surface of the mandrel and the inner surface of the moulded article.

A pipe section is provided for use in assembling with other such pipe sections to form a pipeline, the pipe section having an external screw thread at one end and a complementary internal screw thread at the other end by means of which two such pipe sections can be screwed together end to end.

A pipe section is formed with a shape and dimensions of the parts bearing screw threads such that when successive pipe sections are joined together the internal and external profiles of the joined pipe sections are substantially constant.

Preferably, the end of the pipe section having the external screw thread is provided with an adjacent male taper and the end of the pipe section having the internal screw thread is provided with a flarc or female taper the shape of which complements that of the male taper on the other end of the pipe section such that when two adjacent pipe sections are joined together by screwing the said tapers are brought into close contact.

In order to assist in making the junctions between adjacent pipe sections fluid tight, one of the said tapers may be provided with a circumferential groove adapted to receive an O-ring seal. This circumferential groove may be formed on the male tapered portion.

Conveniently, the ends of the pipe sections may be provided with non-threaded portions adjacent the threaded portion such that when successive pipe sections are joined by the threaded engagement of the externally threaded end of one pipe section into the internally threaded end of another pipe section, the non-threaded sections of pipe are juxtaposed, one of the said non-threaded sections of pipe being provided with a circumferential groove adapted to receive an O-ring seal.

The non-threaded section of pipe adjacent the externally screw threaded portion may be provided with the said circumferential groove.

In order to facilitate engaging adjacent pipe sections the screw threads are preferably of multi-start form. For example, by making them of four-start form it requires no more than a quarter turn to engage the threads.

The screw threads themselves may have an asymmetric trapezoidal profile, one flank of the screw thread having a smaller angle to a radial plane perpendicular to the axis than the other. The flank having the smaller radial angle is thus adapted to act as a pressure flank.

A pipe section may further be provided with surface formations, such as knurling, adjacent the screw-threaded portions on the external surface of the pipe, whereby to facilitate the screwing together of successive pipe sections by ensuring that handling apparatus is able to obtain the secure grip for rotating the pipe around its longitudinal axis.

A method of lining an aged, broken or damaged pre-existing pipeline and a method of laying a subterranean pipeline is provided.

The method of lining an aged, broken or damaged pre-existing pipeline essentially comprises the steps of: locating the line of the pre-existing pipeline; excavating or otherwise forming two pits spaced along the length of the pre-existing pipeline to expose the pipe; removing a section of thus-exposed pipe; introducing into the open end of the exposed section of pipe a pipe section as defined hereinabove, the outer diameter of which is not greater than the inner diameter of the pipe forming the pre-existing pipeline; pressing the said pipe section forward into the pre-existing pipeline by exerting an axial thrust on its exposed end; screwing a second pipe section as defined hereinabove onto the exposed end of the said first pipe section, and pressing the said second pipe section axially to urge it to move into the said pre-existing pipeline and correspondingly to move the first said pipe section further into the said pre-existing pipeline; and repeating the above steps until the pre-existing pipeline has been lined between the said two pits.

The method of laying a subterranean pipeline essentially comprises the steps of excavating two pits spaced along the intended line of the said pipeline; forming a preliminary subterranean passage between and opening into the said two pits; introducing one end of a pipe section as defined hereinabove into the subterranean passage at one end of the said passage between the said two pits; pressing the said pipe section into the passage by exerting a thrust onto its exposed end; screwing the second pipe section as defined herein above onto the exposed end of the first pipe section; pressing the second pipe section into the passage by exerting an axial thrust at its exposed end, thus urging the first pipe section further along the said passage; and repeating the above steps until the leading end of the first pipe section arrives in the other said pit at the end of the said passage remote from that at which introduction of the said pipe section takes place.

Various embodiments of the present invention will now be more particularly described, by way of example, with reference to the accompanying drawings, in which:
Figure 1 is a longitudinal section of a part of a mould for forming a moulded article in accordance with the principles of the present invention;
Figure 2 is a cross-section taken on a line II-II of Figure 1;
Figure 3 is a longitudinal section through a moulded article in the form of a pipe section made with the mould of Figure 1;
Figure 4 is an enlarged detail, in longitudinal section, of an alternative embodiment of moulded article;
Figure 5 is a cross-section through the moulded article of Figure 3, taken on the line IV-IV thereof; and
Figure 6 is a schematic illustration of the method of use of a plurality of pipe sections made according to the principles of the present invention to reline a damaged or broken aged pipeline.

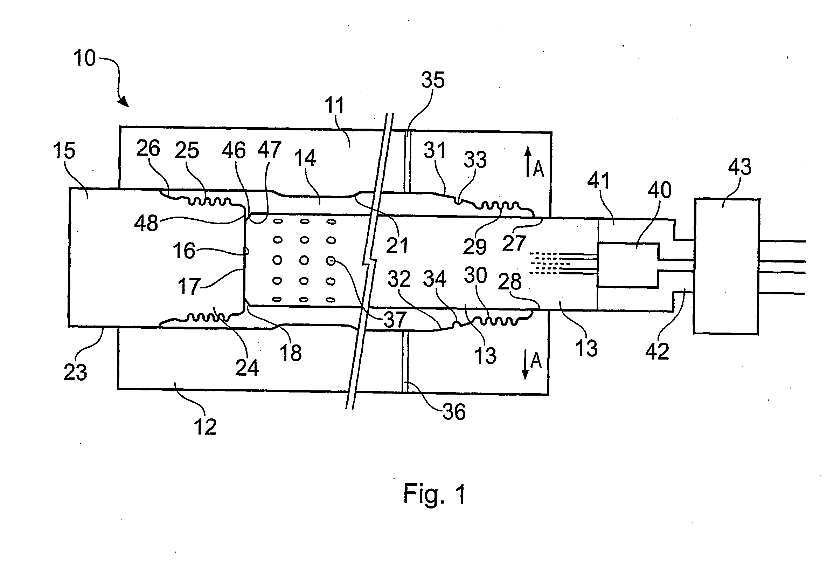

Referring first to Figure 1, there is shown a multi-part mould structure 10 for forming a cylindrical article about a centre line CL. The mould structure 10 essentially comprises upper and lower main mould parts 11, 12 defining a mould cavity within which is located an elongate mandrel 13. The mould is significantly longer than it is wide, in order to make a moulded.article approximately one half of a metre in length and ten centimetres in diameter. For this reason the two ends of the mould have been shown in detail with a break line in the centre which represents the extended length of the mould.

The two mould parts 11, 12 and the mandrel 13 define an annular mould cavity generally indicated 14 having specific features which will be described in more detail below.

At the left hand end as viewed in Figure 1 the mould cavity 14 is closed by a terminal mould part 15 which is shaped with a flat end face 16 which engages tightly with the corresponding flat end face 17 of the mandrel 13. Surrounding the end of the flat end face 17 of the mandrel 13 is an annular bevelled edge 18 the function of which will be described in more detail hereinbelow.

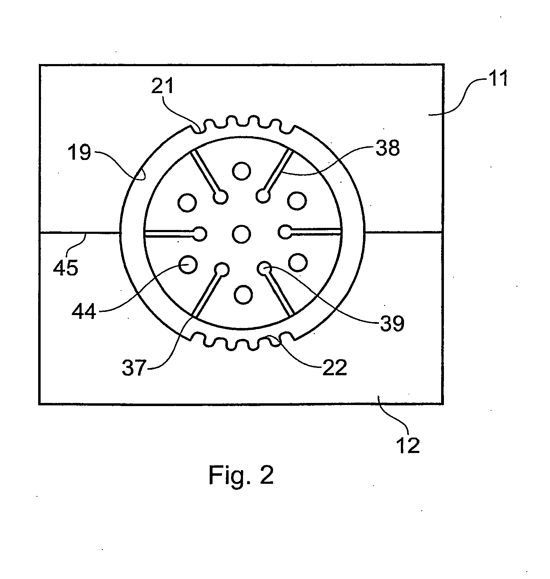

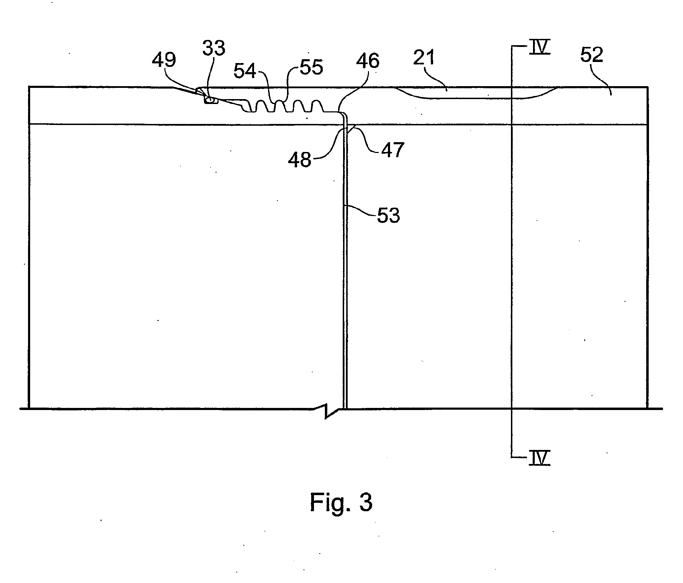

The mould parts 11, 12 each have a semi-cylindrical curved inner surface 19, 20 (see Figure 2) respectively whereby to form a cylindrical outer surface of the moulded article when formed. These surfaces 19, 20 are not smooth surfaces but are slightly roughened, again for purposes which will be described in more detail below. Each cylindrically curved surface 19, 20 has a plurality of inwardly radially projecting axially extending ribs or ridges 21, 22 respectively which form ribbed sections of the outer surface of the moulded product which will be described in more details in relation to Figure 3 and the function of which will be described in more detail below.

The terminal mould member 15 has a portion 23 having a cylindrical surface of diameter matching that of the inner surfaces 19, 20 of the main mould portions 11, 12 and is a sliding fit within these portions. At its innermost end region the terminal mould member has an end portion generally indicated 24 of smaller diameter than main body part thereof, and the cylindrical surface of this portion 24 bears a multi-start screw thread 25. The flights of the screw thread 25 are of such a depth that the troughs thereof lie on a cylindrical plane approximately mid-way between the diameter of the mandrel 13 and the diameter of the internal surfaces 19, 20 of the main mould parts 11, 12.

Between the threaded end portion 24 and the cylindrical portion 23 of the terminal mould member 15 is a tapered region 26.

At the other end of the mould cavity 14 the mandrel 13 extends axially beyond the main mould members 11, 12 and these are each formed with a respective cylindrical terminal surface 27, 28 the diameter of which matches the outer diameter of the mandrel 13, an internally threaded portion 29, 30 and a tapered portion 31, 32 having a respective radially inwardly projecting circumferential rib 33, 34. The inclined surface 31 extends from the threaded portions 29, 30 to the cylindrical surface 19, 20 of the mould members 11, 12.

As will be appreciated, therefore, the mould cavity 14 is a cylindrical form defining a hollow cylindrical article with an internal screw thread at one end leading by an outwardly flaring taper to the end of the article and an external screw thread at the other end separated from the main body of the article by a corresponding taper.

When the mould parts 11, 12, 13, 15 are all fitted together the mould cavity 14 can be filled through an opening 35 in the mould member 11 and a corresponding opening 36 in the mould member 12. In practice there may be a number of the opening 35, 36 spaced along the length of the mould to encourage uniform delivery of injected material.

As can be seen in Figures 1 and 2, the mandrel 13 has a plurality of very small openings 37 over the entirety of its surface (only some of which are illustrated in the drawings, greatly enlarged for clarity). These openings 37, as can be seen in Figure 2 are the exit ends of radial passages 38 within the mandrel 13, which communicate at their radially inner ends with axial passages 39. As schematically illustrated in Figure 1, at the right hand end of the mandrel 13 these axial passages 39 communicate with a manifold chamber 40 within a coupling 41 which is in fluid communication with a duct 42 leading to a source of fluid under pressure (not illustrated) via a refrigeration unit 43 illustrated only schematically in the drawing, but which may be of any known type. Other coolant passages within the mould members 11, 12 and 15 may also be provided but are not illustrated in detail.

In use of the apparatus illustrated in Figures 1 and 2, when the mould is closed and held in its closure position by appropriate clamping means (not illustrated) which may be conventional in the art for multi-part moulds, a heated molten plastics material is injected into the mould cavity 14 until it is filled entirely. During this time the openings 37, which are of extremely small dimensions, are not invested with the injection moulded plastics partly because of the surface tension of this material and partly because the passages 39 are placed under super-atmospheric pressure sufficient to resist the ingress of molten plastics material into the radial passages 38. Although illustrated on a regular array the holes 37 are in practice spaced irregularly over the surface of the mandrel and the hole size varies along the length of the mandrel being larger at the end of the mandrel to allow for compensation of volume upon movement.

Since this procedure results in a preliminary introduction into the mould cavity 14 of pressurised gas a suitable exit point (not shown) is provided through which this gas may escape until such a time as the mould cavity 14 is filled in order to avoid mis-shaping the moulded product. In practice the mould cavity is slightly 'overpumped' upon injection, that is a slightly larger volume of material is injected than the calculated or measured volume of the cavity itself. This is a very small factor, however, for example of the region of 0.0001kg per kg.

Once the mould cavity 14 is full the mould members are cooled by coolant fluid passed through passages 44 in the mandrel 13 (see Figure 2) and the other passages (not shown) in the mould members 11, 12, 15 and when the moulded material has cooled sufficiently to form a skin at least in the interface region between itself and the mandrel 13, the pressurisation of the passages 39 via the duct 42 is increased to allow fluid to flow out from the openings 37 into an interstitial space thereby created between the mandrel 13 and the inner surface of the moulded product in the cavity 14. At the same time the mandrel 13 is withdrawn axially in the direction of the arrow A of Figure 1 with the fluid flowing out of the passages 37 acting as a coolant and lubricant for this purpose. Although it would be possible to rotate the mandrel 13 about its longitudinal axis as it is withdrawn this is considered to be generally unnecessary and a straight draw is preferred. When the mandrel 13 has been withdrawn the terminal mould member 15 is then also withdrawn by rotating it to effectively 'unscrew' it from the threaded portion of the moulded product formed by the thread flights 25. The unscrewing of the terminal mould member 15 is facilitated by the inter-engagement of the ribs 21, 22 in the mould members 11, 12 with the corresponding ribs thus formed in the moulded product, thereby resisting any rotation of the moulded product about the axis defined by the centreline CL of the mould. When the terminal mould member 15 has been withdrawn the two mould parts 11, 12 can be separated, moving apart in the direction of the double arrow B breaking at the mould separation line 45 of Figure 2. The roughening of the outer surface of the moulded product by having a rough inner cylindrical surface 19, 20 to the two main mould parts 11, 12 encourages cooling of the moulded product once removed from the mould.

The bevelled end 18 of the mandrel 13 encourages the formation on the inner cylindrical surface of the moulded article of a radially inwardly directed circumferential ridge 46 having a generally radial inclined face 47 directed towards the distal end of the moulded product and a generally radial perpendicular surface 48. This ridge plays an important part in sealing the cavity to facilitate withdrawal of the mandrel as the gas is introduced through the openings 37. The dimensions of the cavity forming the ridge 46 will depend on the thickness of the wall of the pipe being formed, being greater the greater the thickness, and also varying in dependence on the nature of the material to be injected.

Referring now to Figures 1 and 3, it will be appreciated that the circumferential ribs 33, 34 in the right hand end of the mould parts 11, 12 forms a corresponding circumferential groove 33' in the moulded product which, before coupling with an adjacent pipe section receives a suitable resilient O-ring seal 49.

Figure 3 is in fact a half axial section showing that part of two adjacent pipe sections 50, 51 each formed as a moulded product from the mould described in relation to Figures 1 and 2, illustrating only that part above the centre line CL.

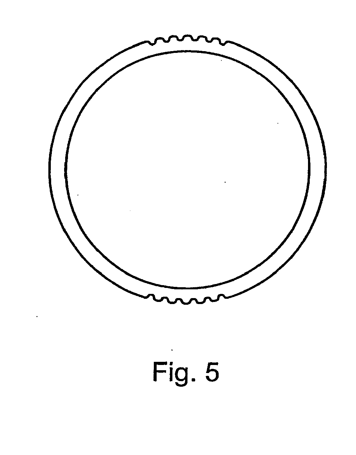

The left hand part of the moulded article 51 has a cylindrical wall 52 of accurately constant wall thickness, bearing a set of axial grooves 21' separated by ribs formed by the ribs 21 in the mould element 11. These parallel ribs match corresponding ribs on the diametrically opposite part of the pipe section 51 and the five grooves 21' and interspaced ribs extend over a 30 degree portion of the circumference of the pipe as can be seen in Figure 5. A corresponding set of ribs and grooves may be provided at each end of the pipe although they are only illustrated at the female end of the embodiment of Figure 3.

As can be seen in Figure 3, with an O-ring seal 49 in the groove 33' of the `male' end of one pipe, two adjacent pipes can be screw threaded together until an end 53 of the 'male' pipe meets the shoulder surface 48 of the inwardly directed rib or flashing 46 of the 'female' pipe. As can be seen in Figure 3, the flights of the screw thread are approximately trapezoidal in shape, with a pressure flank 54 in the region of 10 degrees to the radial plane, and a lead flank 55 approximately 20 degrees to the radial plane. The screw threads can be seen clearly in Figure 3 to be approximately midway through the wall thickness of the pipe wall 50, 52. When the two pipes are screwed together firmly, the tapered portions engage securely to form a high-friction engagement and to compress the O-ring seal 33' to form a gas tight and/or water tight seal between adjacent pipes. Since, in use, successive pipes are screwed on in the same direction, the action of adding a further pipe reinforces the connection of previously-screwed pipes sections.

Moreover, because the pipes are joined together by connection means acting within the wall thickness of the pipes, there is no need for an external sleeve which would otherwise enlarge the outer diameter of the pipe, and apart from the small flashing rib 46 the smooth internal surface of the pipe is entirely unobstructed. It should be noted that the dimensions of this flashing rib have been exaggerated in the drawings for the sake of illustration. In practice the dimensions thereof would be not greater than half to one millimetre in radial dimension. After moulding is complete this flashing is removed.

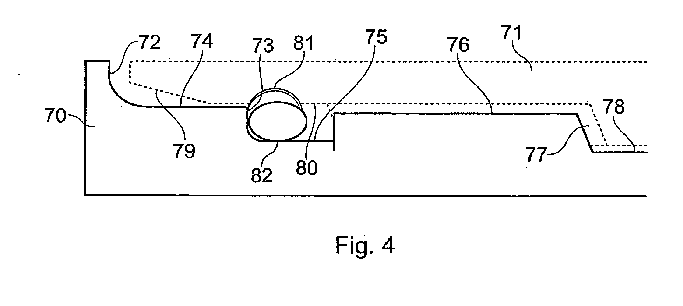

Referring now to Figure 4, an alternative embodiment is illustrated, showing only the two end sections of adjacent pipes where they fit together. In this embodiment the 'male' end portion of a pipe section 70 is shown engaged into the 'female' end portion of pipe section 71. The pipe section 70 has, in this embodiment, no taper between the threaded region and the outer wall, but rather a shoulder 72 and a step 73 between two parallel, co-axial cylindrical surfaces 74, 75. The thread flights, 76, which in this figure are shown schematically as an interpenetrating region with the thread flights 77 of the female portion of the pipe section 71, separate the cylindrical surface 75 from the terminal cylindrical surface 78 of reduced diameter.

The 'female' end portion of the pipe section 71 has a flared entrance 79 to facilitate introducing the male portion of the pipe section 70 into it, and a cylindrical surface 80 between the inner end of the flared portion 79 and the thread flights 77. In this cylindrical surface is formed a circumferential groove 81 for receiving an O-ring seal 82. By forming the facing surfaces 75, 80 which engage the O-ring seal 82 the contact pressure on the seal is independent of the force exerted to tighten the screw threads engaging the two pipe sections together.

In another embodiment, not shown, one end of the pipe section is made of larger diameter to receive the opposite end of an adjacent pipe section in a manner similar to that of traditional clay pipes. The two mating ends may be screw threaded together or a simple O-ring seal may be used to seal the junction. Alternatively, respective co-operating sump-engagement members may be formed at respective ends, whereby to engage the pipe sections together and retain them both against forces of compression and tension.

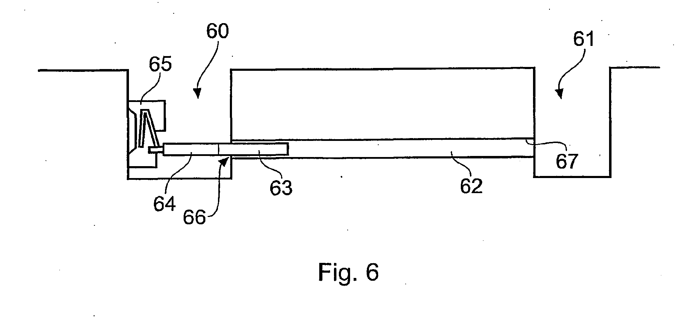

Referring now to Figure 6, there is schematically shown a process for installing a pipeline utilising sections such as those described hereinabove. In forming the pipeline first two spaced pits 60, 61 are excavated to a depth just below the intended level of the pipeline. Then, using means known per se and therefore not described here, a passage 62 following the intended line of the pipe is formed, having an opening 66 into the pit 60 and an opening 67 into the pit 61. Then, a pipe section 63 such as that illustrated and described hereinabove in relation to Figure 3 or 4 is introduced into the opening 66. A suitable press machine 65 is located in the pit 60 for this purpose. The details of this press machine do not form any part of the subject of this invention and will, therefore, not be described here in detail. Suffice it to say that the press machine 65 engages the exposed end of the pipe 63 and presses it along the passage 62 formed between the two pits 60, 61. The press machine is then retracted, a fresh pipe section 64 screwed to the exposed end of the pipe 63 and the press 65 is then re-engaged to the exposed end of the pipe section 64 to urge this and the pipe 63 along the passage 62. This process is repeated until the leading end of the pipe section 63 appears through the entrance 67 into the pit 61.

## Claims

1. A method of producing an injection-moulded plastics article having a hollow interior open at both ends, the method comprising the steps of:
forming a mould cavity (14) which is annular in cross-section having outer die parts (11,12) and an inner mandrel (13);
introducing plastics material to fill the formed mould cavity; and
after the moulded article has cooled at least sufficiently to form a solid surface, delivering a pressurised fluid to the interface between the mandrel and the inner surface of the moulded article, through passages (38) in the mandrel to openings (32) in the surface of the mandrel at the interface, whilst withdrawing the mandrel from the inner surface of the moulded article and maintaining the outer die parts in a closed condition, wherein one end of the mould cavity is closed with a terminal die part (15) the terminal die part and the corresponding end of the mandrel are shaped to form an annular space (18) in which an inwardly directed annular flashing is formed on the inner surface of the moulded article upon introduction of the plastics material into the mould cavity.

2. A method according to Claim 1, wherein a coolant fluid is passed through the interior of the mandrel at least after the plastics material injection step.

3. A method according to Claim 1 or Claim 2, wherein said terminal die part bears an external screw thread (25) to form a corresponding internal screw thread in the end of the moulded article.

4. A method according to any preceding claim, wherein the terminal die part is removed either before or after the withdrawal of the mandrel, and the other outer die parts are separated only after withdrawal of the mandrel.

5. A method according to Claim 4, wherein the threaded terminal die part is removed by unscrewing it before the other outer die parts are separated.

6. A method according to any preceding claim, wherein the pressurised fluid is a gas.

7. A method according to Claim 6, wherein the pressurised fluid is air.

8. A method according to any preceding claim, wherein the pressurised fluid is preliminarily cooled before introduction into the mould cavity.

9. A method according to any preceding claim, wherein the pressurised fluid is delivered to the interface between the mandrel and the internal surface of the moulded article at a plurality of points substantially uniformly distributed over the area of the interface.

10. Apparatus for producing a hollow moulded article having a hollow interior open at both ends by injection moulding, comprising;
separable outer die parts (11,12) for defining the outer wall of a mould cavity (14) forming an external surface of the hollow moulded article; and
an inner mandrel (13) for defining an internal surface of the hollow moulded article formed by filling the moulded cavity, the mandrel having a plurality of openings (32) distributed over at least part of its surface at the interface between the mandrel and the internal surface of the hollow moulded article, the openings communicating with internal passages (38) leading to a duct (42), which can be selectively put in communication with a source of fluid (43) under pressure for withdrawal of the mandrel while maintaining the outer die parts in a closed condition, wherein the article comprises a moulded pipe section open at both ends, **characterized in that** the end of the mandrel has a tapered, bevelled or otherwise relieved section, and the co-operating part of a terminal die part (15) provided to close one end of the mould cavity also has a tapered, bevelled or otherwise relieved section whereby to form an inwardly projecting annular flashing upon moulding of the article.

11. Apparatus according to Claim 10, wherein at least one dimension of each of the said openings in the said part of the surface of the mandrel is such as to inhibit entry of the plastics material upon injection thereof into the mould cavity.

12. Apparatus according to Claim 11, wherein the said openings are elongate slots.

13. Apparatus according to Claim 11, wherein the said openings are generally circular in section.

14. Apparatus according to any of Claims 10 to 13, wherein the said at least part of the surface of the mandrel comprises a cylindrically curved wall,

15. Apparatus according to Claim 14, wherein the said at least part of the surface of the mandrel includes a flat end wall thereof.

16. Apparatus according to any of Claims 10 to 15, wherein the terminal die part bears a screw thread for forming a corresponding internal screw threaded portion in an open end of the moulded article.

17. Apparatus according to any of Claims 10 to 15, wherein both the said outer die parts and the mandrel have coolant passages through which in use flows a coolant fluid for cooling the moulded product after injection and before withdrawal of the mandrel.

18. Apparatus according to any of Claims 10 to 17, wherein the surfaces of the outer die parts which face into the mould cavity are rougher than the surfaces of the mandrel which define the inner part of the mould cavity whereby to promote a differential frictional force between the moulded article and the outer die parts with respect to that between the moulded article and the mandrel, to facilitate withdrawal of the mandrel.

19. Apparatus according to any of Claims 10 to 18, wherein at least one of the outer dies has a surface formation thereon whereby to form in the finished article a knurling or other surface formation to facilitate gripping the final article by mechanical means and turning it about its longitudinal axis.

## Patentansprüche

1. Verfahren zur Herstellung spritzgegossener Kunststoffgegenstände mit einem an beiden Enden offenen hohlen Inneren, wobei das Verfahren die Schritte aufweist:
Bilden eines im Querschnitt ringförmigen Gussformhohlraums (14), der äußere Gussformteile (11, 12) und einen inneren Dorn (13) aufweist,
Einbringen von Kunststoffmaterial zum Füllen des gebildeten Gussformhohlraums, und
nachdem der gegossene Gegenstand wenigstens zur Bildung einer festen Oberfläche ausreichend gekühlt worden ist, Zuführen eines unter Druck stehenden Fluids zu der Grenzfläche zwischen dem Dorn und der Innenfläche des gegossenen Gegenstands durch Durchgänge (38) im Dorn zu Öffnungen (32) in der Oberfläche des Doms an der Grenzfläche während der Dorn von der Innenfläche des gegossenen Gegenstands fortbewegt und die äußeren Gussformteile in einem geschlossenen Zustand aufrechterhalten werden, wobei ein Ende des Gussformhohlraums mit einem abschließenden Gussformteil (15) verschlossen ist, wobei das abschließende Gussformteil und das korrespondierende Ende des Doms geformt sind zum Bilden eines ringförmigen Raums (18), bei dem ein nach innen gerichteter ringförmiger Grat auf der Innenfläche des gegossenen Gegenstands beim Einbringen des Kunststoffmaterials in den Gussformhohlraum gebildet wird.

2. Verfahren nach Anspruch 1, wobei wenigstens nach dem Kunststoffmaterial-Einspritzschritt ein Kühlfluid durch das Innere des Doms geleitet wird.

3. Verfahren nach Anspruch 1 oder Anspruch 2, wobei das abschließende Gussformteil ein Schraubenaußengewinde (25) trägt, um ein korrespondierendes Schraubeninnengewinde im Ende des gegossenen Gegenstands zu bilden.

4. Verfahren nach einem der vorhergehenden Anspruche, wobei das abschließende Gussformteil entweder vor oder nach dem Fortbewegen des Doms entfernt wird und die anderen äußeren Gussformteile erst nach dem Fortbewegen des Doms getrennt werden.

5. Verfahren nach Anspruch 4, wobei das mit Gewinde versehene abschließende Gussformteil durch Abschrauben entfernt wird, bevor die anderen äußeren Gussformteile getrennt werden.

6. Verfahren nach einem der vorhergehenden Ansprüche, wobei das unter Druck stehende Fluid ein Gas ist.

7. Verfahren nach Anspruch 6, wobei das unter Druck stehende Fluid Luft ist.

8. Verfahren nach einem der vorhergehenden Ansprüche, wobei das unter Druck stehende Fluid vor dem Einbringen in den Gussformhohlraum vorgekühlt wird.

9. Verfahren nach einem der vorhergehenden Ansprüche, wobei das unter Druck stehende Fluid der Grenzfläche zwischen dem Dorn und der Innenfläche des gegossenen Gegenstands bei einer Anzahl von Punkten, die im wesentlichen gleichmäßig über den Bereich der Grenzfläche verteilt sind, zugeführt wird.

10. Vorrichtung zur Herstellung eines ein an beiden Enden offenes hohles Inneres aufweisenden hohlen gegossenen Gegenstands durch Spritzguss, aufweisend:
Trennbare äußere Gussformteile (11, 12) zum Definieren der eine Außenfläche des hohlen gegossenen Gegenstands bildenden äußeren Wand eines Gussformhohlraums (14) und
einen inneren Dorn (13) zum Definieren einer Innenfläche des durch Füllen des Gussformhohlraums gebildeten hohlen gegossenen Gegenstands, wobei der Dorn mehrere Öffnungen (37) aufweist, die über wenigstens einen Teil seiner Oberfläche an der Grenzfläche zwischen dem Dorn und der Innenfläche des hohlen gegossenen Gegenstands verteilt sind, wobei die Öffnungen mit inneren Durchgängen (38) kommunizieren, die zu einem Kanal (42) führen, der mit einer Quelle (43) für unter Druck stehendes Fluid zum Fortbewegen des Doms unter Aufrechterhaltung der äußeren Gussformteile in einem geschlossenen Zustand wahlweise in Kommunikation gesetzt werden kann, wobei der Gegenstand einen an beiden Enden offenen gegossenen Röhrenabschnitt aufweist, **dadurch gekennzeichnet, dass** das Ende des Dorns einen verjüngten, abgeschrägten oder anderweitig ausgesparten Abschnitt aufweist, und der kooperierende Teil des abschließenden Gussformteils (15), der nahe bei einem Ende des Gussformhohlraums bereitgestellt ist, ebenfalls einen verjüngten, abgeschrägten oder anderweitig ausgesparten Abschnitt aufweist, um beim Gießen des Gegenstands einen nach innen ragenden ringförmigen Grat zu bilden.

11. Vorrichtung nach Anspruch 10, wobei wenigstens eine Abmessung jeder der Öffnungen in dem besagten Teil der Oberfläche des Dorns derart ist, dass Eindringen des Kunststoffmaterials bei seinem Einspritzen in den Gussformhohlraum verhindert ist.

12. Vorrichtung nach Anspruch 11, wobei die Öffnungen langgestreckte Schlitze sind.

13. Vorrichtung nach Anspruch 11, wobei die Öffnungen im Schnitt generell kreisförmig sind.

14. Vorrichtung nach einem der Ansprüche 10 bis 13, wobei der besagte wenigstens eine Teil der Oberfläche des Doms eine zylindrisch gebogene Wand aufweist.

15. Vorrichtung nach Anspruch 14, wobei der besagte wenigstens eine Teil der Oberfläche des Doms eine flache Endwand aufweist.

16. Vorrichtung nach einem der Ansprüche 10 bis 15, wobei das abschließende Gussformteil ein Schraubengewinde zur Bildung eines korrespondierenden Schraubeninnengewindeabschnitts in einem offenen Ende des gegossenen Gegenstands trägt.

17. Vorrichtung nach einem der Ansprüche 10 bis 15, wobei sowohl die äußeren Gussformteile als auch der Dorn Kühlmitteldurchgänge aufweisen, durch die bei Benutzung ein Kühlfluid zum Kühlen des gegossenen Produkts nach Einspritzung und vor Fortbewegen des Doms strömt.

18. Vorrichtung nach einem der Ansprüche 10 bis 17, wobei die dem Gussformhohlraum zugewandten Flächen der äußeren Gussformteile rauer sind als die den inneren Teil des Gussformhohlraums definierenden Flächen des Doms, um dadurch eine differentielle Reibungskraft zwischen dem gegossenen Gegenstand und den äußeren Gussformteilen in Bezug auf diejenige zwischen dem gegossenen Gegenstand und dem Dorn zu fördern, um ein Fortbewegen des Doms zu erleichtern.

19. Vorrichtung nach einem der Ansprüche 10 bis 18, wobei auf wenigstens einer der äußeren Gussformen wenigstens eine Flächengestaltung zur Bildung einer Rändelung im fertigen Gegenstand oder eine andere Flächengestaltung zur Erleichterung einer Ergreifung des fertigen Gegenstands durch eine mechanische Einrichtung und Drehung desselben um seine Längsachse gegeben ist.

## Revendications

1. Procédé de production d'un article en matière plastique moulé par injection comportant une ouverture intérieure évidée aux deux extrémités, le procédé comprenant les étapes consistant à :
former une cavité de moule (14) qui est annulaire en coupe transversale comportant des parties de matrice extérieures (11, 12) et un mandrin intérieur (13) ;
introduire une matière plastique pour remplir la cavité de moule formée ; et
après que l'article moulé a refroidi au moins suffisamment pour former une surface solide, délivrer un fluide sous pression vers l'interface entre le mandrin et la surface intérieure de l'article moulé, à travers des passages (38) dans le mandrin vers des ouvertures (32) dans la surface du mandrin au niveau de l'interface, tout en retirant le mandrin de la surface intérieure de l'article moulé et en maintenant les parties de matrice extérieures dans une condition fermée, dans lequel une première extrémité de la cavité de moule est fermée avec une partie de matrice terminale (15), la partie de matrice terminale et l'extrémité correspondante du mandrin sont façonnées afin de former un espace annulaire (18) dans lequel une bavure annulaire orientée vers l'intérieur est formée sur la surface intérieure de l'article moulé lors de l'introduction de la matière plastique à l'intérieur de la cavité de moule.

2. Procédé selon la revendication 1, dans lequel un fluide réfrigérant est amené à traverser l'intérieur du mandrin au moins après l'étape d'injection de la matière plastique.

3. Procédé selon la revendication 1 ou la revendication 2, dans lequel ladite partie de matrice terminale supporte un pas de vis externe (25) afin de former un pas de vis interne correspondant dans l'extrémité de l'article moulé.

4. Procédé selon l'une quelconque des revendications précédentes, dans lequel la partie de matrice terminale est retirée soit avant, soit après le retrait du mandrin, et les autres parties de matrice extérieures ne sont séparées qu'après le retrait du mandrin.

5. Procédé selon la revendication 4, dans lequel la partie de matrice terminale taraudée est retirée par dévissage avant que les autres parties de matrice extérieures ne soient séparées.

6. Procédé selon l'une quelconque des revendications précédentes, dans lequel le fluide sous pression est un gaz.

7. Procédé selon la revendication 6, dans lequel le fluide sous pression est de l'air.

8. Procédé selon l'une quelconque des revendications précédentes, dans lequel le fluide sous pression est refroidi au préalable avant son introduction dans la cavité de moule.

9. Procédé selon l'une quelconque des revendications précédentes, dans lequel le fluide sous pression est délivré vers l'interface entre le mandrin et la surface interne de l'article moulé au niveau d'une pluralité de points répartis de manière globalement uniforme sur la zone de l'interface.

10. Appareil destiné à produire un article moulé évidé comportant une ouverture intérieure évidée aux deux extrémités par un moulage par injection, comprenant ;
des parties de matrice extérieures séparables (11, 12) destinées à définir la paroi extérieure d'une cavité de moule (14) formant une surface externe de l'article moulé évidé ; et
un mandrin intérieur (13) destiné à définir une surface interne de l'article moulé évidé formé par le remplissage de la cavité moulée, le mandrin ayant une pluralité d'ouvertures (32) réparties sur au moins une partie de sa surface au niveau de l'interface entre le mandrin et la surface interne de l'article moulé évidé, les ouvertures communiquant avec des passages internes (38) menant à une conduite (42), qui peut être mise sélectivement en communication avec une source de fluide (43) sous pression pour un retrait du mandrin tout en maintenant les parties de matrice extérieures dans une condition fermée, où l'article comprend une section de tuyau moulée ouverte aux deux extrémités, **caractérisé en ce que** l'extrémité du mandrin comporte une section conique, biseautée ou dépouillée d'une autre façon, et la partie coopérante d'une partie de matrice terminale (15) prévue pour fermer une extrémité de la cavité de moule comporte également une section conique, biseautée ou dépouillée d'une autre façon, ce qui permet de former une bavure annulaire se projetant vers l'intérieur lors d'un moulage de l'article.

11. Appareil selon la revendication 10, dans lequel au moins une dimension de chacune desdites ouvertures dans ladite partie de la surface du mandrin est telle qu'elle empêche l'entrée de la matière plastique lors de son injection dans la cavité de moule.

12. Appareil selon la revendication 11, dans lequel lesdites ouvertures sont des fentes allongées.

13. Appareil selon la revendication 11, dans lequel lesdites ouvertures sont en général circulaires en coupe.

14. Appareil selon l'une quelconque des revendications 10 à 13, dans lequel ladite au moins une partie de la surface du mandrin comprend une paroi courbe de façon cylindrique.

15. Appareil selon la revendication 14, dans lequel ladite au moins une partie de la surface du mandrin comprend une paroi d'extrémité plate de celui-ci.

16. Appareil selon l'une quelconque des revendications 10 à 15, dans lequel la partie de matrice terminale supporte un pas de vis en vue de former une partie taraudée interne correspondante dans une extrémité ouverte de l'article moulé.

17. Appareil selon l'une quelconque des revendications 10 à 15, dans lequel à la fois lesdites parties de matrice extérieures et le mandrin comportent des passages de réfrigérant à travers lesquels en utilisation circule un fluide réfrigérant destiné à refroidir le produit moulé après l'injection et avant le retrait du mandrin.

18. Appareil selon l'une quelconque des revendications 10 à 17, dans lequel les surfaces des parties de matrice extérieures qui sont opposées dans la cavité de moule sont plus rugueuses que les surfaces du mandrin qui définissent la partie intérieure de la cavité de moule, ce qui permet de favoriser une force de frottement différentielle entre l'article moulé et les parties de matrice extérieures par rapport à celle entre l'article moulé et le mandrin, afin de faciliter un retrait du mandrin.

19. Appareil selon l'une quelconque des revendications 10 à 18, dans lequel au moins une des matrices extérieures comporte une formation de surface sur celle-ci au point de former dans l'article fini un moletage ou une autre formation de surface afin de faciliter la préhension de l'article final par un moyen mécanique et sa rotation autour de son axe longitudinal.
